# EUROPEAN PATENT SPECIFICATION

(11) **EP 0 532 683 B1**
(45) Date of publication and mention of the grant of the patent: **27.12.1995**
(21) Application number: 91912600.3
(22) Date of filing: 06.06.1991
(51) Int. Cl.: F28D 20/00

(54) **HEAT ACCUMULATOR, METHOD FOR THE PRODUCTION THEREOF AND ENERGY SYSTEM PROVIDED WITH SUCH A HEAT ACCUMULATOR**
WÄRMESPEICHER, VERFAHREN ZU DESSEN HERSTELLUNG UND MIT EINEM SOLCHEN WÄRMESPEICHER VERSEHENES ENERGIESYSTEM
ACCUMULATEUR DE CHALEUR, SON PROCEDE DE PRODUCTION, ET SYSTEME ENERGETIQUE MUNI D'UN TEL ACCUMULATEUR DE CHALEUR

(30) Priority: 07.06.1990 NL 9001289
(43) Date of publication of application: 24.03.1993
(73) Proprietor: DE BEIJER RAADGEVEND TECHNISCH BUREAU B.V., 6841 HA Arnhem (NL)
(72) Inventor: DE BEIJER, Hendrikus, Antonius, NL-6851 CM Huissen (NL); KLEIN HORSMAN, Jan, Willem, NL-6835 BV Arnhem (NL)
(74) Representative: de Bruijn, Leendert C.
(86) International application number: NL9100093
(87) International publication number: WO9119154

(56) References cited:
- EP-A- 0 035 871
- WO-A-89/00271
- DE-A- 2 622 699
- DE-A- 3 612 781
- FR-A- 1 029 877
- GB-A- 2 010 468
- US-A- 4 169 362
- US-A- 4 341 262
- US-A- 4 403 643

## Description

The invention relates to a chemical heat accumulator for the storage and/or release of heat, heat being stored or released in the form of chemical binding energy comprising the features according to the preamble of claim 1.

Such a heat accumulator is known, for example, from DE-A-26 22 699.

The invention also relates to a method for the production of a heat accumulator and to an energy system which comprises a heat accumulator.

When charging the accumulator, the heat-transporting substance (the sorbate) is vaporised from the crystalline material. This vapour can condense in a condenser/vaporiser which is at a lower temperature than the accumulator. When discharging the accumulator the sorbate is vaporised in the condenser/vaporiser with absorption of heat and absorbed, at a higher temperature than that of the condenser/vaporiser, by the crystalline material in the accumulator, with release of heat.

In the present description the term "heat accumulator" is used to denote only the vessel in which the absorption and desorption take place, while the combination with a vaporiser/condenser and any connecting lines is indicated by the term "energy system".

An energy system as indicated above has been disclosed in Netherlands Patent Application 7714490 and US Patent 4186794. In these publications calcium chloride and sodium sulphide are proposed as the solid and water as the heat-transporting substance. A disadvantage of a system of this type is, however, that the solid is poured loosely, in the form of metal salt which may or may not be hydrated, round or in the heat exchanger and as a consequence of this the heat exchange between the absorbent/desorbent material and the heat exchanger is poor. A similar system is disclosed in European Patent Application 35871, aluminium compounds, which are poured into small containers, being used as absorbent/desorbent solid. This system also has the said disadvantage of poor heat transfer. DE-A-2622699 discloses a heat storage element containing as sorption agent a crystalline material such as iron chloride or calcium chloride which does not remain attached to the wall of the element. US-A-4169362 discloses an airconditioning apparatus including a heat adsorption vessel containing a coating of zeolites as sorption material.

Attempts have been made to solve the problem of the poor heat exchange by increasing the heat-conducting power by using additives having a high thermal conductivity (European Patent Application 129473) or by using absorbent/desorbent solids which themselves have a high thermal conductivity, as in European Patent Application 35871. However, solutions of this type have not led to a heat exchange which is such that rapid charging and discharging of the energy system is possible. Another disadvantage of the known chemical heat accumulator system is the need to degas the system from time to time, which demands extra costs and provisions and temporarily removes the system from use.

A heat accumulator has now been found which does not have the said disadvantages and with which charging and discharging times of less than one hour are achievable in an energy system.

The heat accumulator according to the invention is characterised in that the absorbent/desorbent crystalline material comprises sodium sulphide which adheres to the inner wall of the vessel and remains adhering during use and has essentially the same structure in a state in which more heat-transporting substance is absorbed (uncharged accumulator) and in a state in which less heat-transporting substance is absorbed (charged heat accumulator).

As a result of this characteristic, absorption and desorption of heat-transporting substance (sorbate) takes place as closely as possible to the heat-conducting wall and the heat transfer can therefore take place in an optimum manner.

Desorption and absorption then do not lead to a significant change in the crystal structure, as a result of which the adhesion of the crystalline material to the wall is more stable. Moreover, there are then more possibilities for access of the heat-transporting substance to the crystalline material in the desorbed state (charged heat accumulator).

Specifically, it has been found that sodium sulphide is particularly suitable for introducing into the heat accumulator in such a way that the substance remains adhering to the wall after introduction and, moreover, does not significantly change its external structure after absorption and desorption.

The heat-transporting substance can be water (vapour), as is customary. In the discharged state of the energy system, the crystalline material is then in a relatively high hydration state, for example Na₂S.5H₂O, and in the charged state of the energy system is in a low hydration state, for example Na₂S.H₂O or Na₂S.O,5H₂O.

The heat-transporting substance can, however, also be another substance which can be present either in vapour form or in liquid form and can be incorporated in a crystal structure, for example an alcohol, an amine and in particular ammonia (NH₃). The use of ammonia is particularly preferred if heat exchange has to take place at relatively low temperatures.

The crystalline material can be applied directly to the inner wall of the heat accumulator in a desired thickness of, for example, a few mm to a few cm. Preferably, however, the sodium sulphide is present on surface-enlarging, heat-conducting projections at the wall, for example in the form of metal wires, hairs, spirals, ribs and the like. By this means the amount of crystalline material per unit surface area can be increased, as a result of which the thermal capacity of the heat accumulator increases. The adhesion of the crystalline material is also improved by this means. As a result of the firm bonding of the crystalline material to the wall of the heat accumulator, it remains in place even when the accumulator is subjected to movements, shocks and vibrations.

The surface-enlarging structure is obtained by fixing wires or rods or fins made of the same material as the wall of the heat accumulator or of other material to the wall of the accumulator vessel. The fixing can be effected, for example, by hard or soft soldering, but it is also possible for the wall and the surface-enlarging structure to be formed or cast as a single unit. Materials having a good thermal conductivity are particularly suitable (for example copper or coated aluminium). The coating on the aluminium can consist of an impermeable layer, which may or may not be of metallic nature (for example electrolytically or chemically applied copper).

The heat accumulator according to the invention can be constructed in various ways. A particular form is that in which the vessel comprises two concentric tubes, the crystalline material being present in the space between the two tubes. This pipe-shaped heat accumulator is preferably set up vertically. The space between the two tubes is then closed at the bottom by a partition, which also serves to catch any material which may have broken loose.

In one variant of the pipe-shaped accumulator, the inner tube is provided with a valve which can be operated via a magnet located outside the vessel, the inner tube serving to supply and remove the heat-transporting substance. In another variant the inner tube is provided on the inside with a heat exchanger which is known per se. In all variants the heat accumulator can be provided with a heat exchanger on the outside.

If the heat accumulator consists of two concentric tubes, the surface-enlarging projections can be formed, for example, by a rectangularly wound metal wire. The width of the winding then corresponds to the distance between the inner and the outer tube, so that if the wound wire is fitted in spiral form through the space between the two tubes, the winding touches both the outer tube and the inner tube.

The invention also relates to a method for the production of a heat accumulator which has the above- mentioned characteristics. According to this method, the crystalline material is applied in the molten and/or highly hydrated state to the inner wall of a closeable vessel and is made to adhere to the wall by cooling and/or evaporation of, for example, water.

The sodium sulphide is introduced, for example in the maximum hydrated state, such as Na₂S.9H₂O, at elevated temperature into the vessel and sodium sulphide crystals are then formed by cooling, which crystals adhere to the wall of the vessel. If necessary, the steps of applying molten and/or hydrated crystalline material and cooling and crystallising can be repeated until the desired layer thickness is obtained. It is also possible in the interim to pour off the remainder of the molten and/or hydrated material after partial adhesion of the crystalline material has taken place.

In a variant of the method according to the invention which is preferred, the crystalline material is introduced into the vessel after a filler body, for example in the form of a plastic casting core, has been introduced therein, which body leaves a uniform space for the crystalline material. This filler body is then removed again when the crystalline material has adhered to the wall.

Further advantages are offered by carrying out the operations of melting and applying the sodium sulphide, to the heat exchanger with the exclusion of water vapour, oxygen and any other gases, so that no chemical reactions of the sodium sulphide with the atmosphere can occur. As a result, the system will not produce any residual gases other than water during absorption and desorption, so that degassing of the installations is needed only before the first use.

The wall of the heat accumulator and of the energy system can be made of any suitable heat-conducting material, in particular of metal. By using copper or another inert material, for example coated aluminium, which in the absence of oxygen shows no reactions with sodium sulphide, a system is obtained in which the wall material also does not give rise to the evolution of gases which can make the process of vaporising and condensing and of absorption and desorption more difficult. By this means also, degassing or the application of a vacuum during use becomes superfluous.

Before applying the crystalline material, the inner wall of the heat accumulator is,if necessary, provided with a binder and/or an agent which improves the thermal conduction, such as graphite. An agent of this type may optionally be applied at the same time as the crystalline material.

What is achieved by the use of the method according to the invention is that the structure of the crystal lattice of the sodium sulphide, no longer essentially changes after application, that is to say that the distances between the sodium ions and sulphide ions in the Na₂S.9H₂O crystal are virtually the same as those in the Na₂S.5H₂O crystal and the Na₂S.O.5H₂O crystal, with the proviso that in the latter two crystals. spaces are available for water molecules. In principle, the same also applies in the case of different hydration states of other salts, and in the case of a sorbate other than water, for example ammonia.

By varying the cooling rate of the liquid sodium sulphide around the heat exchanger, it is possible to control the rate of crystallisation. By this means, the build-up of the crystals around the heat exchanger can be influenced: in the case of slow cooling Na₂S.5H₂O crystals are first formed directly on the heat exchanger and these are then further built up in. acicular form. On further cooling, Na₂S.9H₂O crystals are also deposited. In the case of this slow cooling, some of the liquid sodium sulphide remains fluid in the form of Na₂S.mH₂O (where m is much greater than 9). On removal of this residual liquid, a certain porosity is obtained which facilitates access and exit of vapour during absorption and desorption respectively. Nevertheless, an adequate adhesion of the crystals to the heat exchanger is ensured in this case. The heat transfer with this structure is optimum.

In the case of rapid cooling the sodium sulphide will crystallise out in a dense layer, only Na₂S.9H₂O crystals being formed.

After the crystalline material has been applied in an adequate amount and in the desired structure, the crystalline material is dehydrated by heating and/or applying a vacuum until the maximum hydration state of the crystalline material which is desired for the conditions of use is obtained. In the case of sodium sulphide, this is preferably approximately 5 mol per mol of Na₂S. The remaining free crystal lattice sites then ensure that the diffusion of the sorbate is always sufficiently high even within the lattice and even in virtually saturated state (discharged heat accumulator).

Depending on the wall material and on the chosen layer thickness, it can be advantageous to apply a binder in the crystalline material or between the wall and the crystalline material. The characteristics of the crystalline material can also be improved by adding graphite or another absorbent and/or heat-conducting material. This addition can improve the homogeneity of the structure and the stability of the layer of crystalline material and, furthermore, a better heat conduction is achieved and the graphite can absorb any traces of undesired residual gases.

The invention also relates to an energy system which comprises a heat accumulator containing a heat-transporting substance which can be either in the liquid phase or in the vapour phase, and a vaporiser and condenser, connected via a closeable vapour line to the heat accumulator, for the vaporisation or condensation of the heat-transporting substance. This type of system must first be charged by supplying heat to the accumulator and by cooling the vaporiser/condenser installation at the same time. When the system is fully or partially charged, the process can be reversed, for example by cooling the accumulator, as a result of which cooling occurs at the vaporiser/condenser installation.

The invention offers an improvement of such an energy system in that the energy system comprises a heat accumulator as described above.

In an advantageous embodiment the heat accumulator and the installation for the vaporisation or condensation of the liquid or vapour respectively have a common gastight housing, the lower section of the housing being the vaporiser/condenser (the cold section) and the upper section of the housing being the heat accumulator (the hot section).

With a design of this type it can be reliably ensured that a specific atmosphere is maintained in the interior of the system. This is important for good functioning of the system, since gases penetrating from the outside, such as ambient air, could disturb the processes occurring in the system.

There is preferably a connecting piece of thermally insulating material between the hot and the cold section. By this means the temperature differences which arise between the vaporiser/condenser and the heat accumulator during use of the system can be better maintained.

According to a simple embodiment, the housing is pipe-shaped. A compact design of the system possesses a housing which is provided on the inside with a partition adjoining the vaporiser/condenser at the top and having a hole which connects to one end of a line which at the other end is connected to the space between line and housing, in which space the crystalline material is located. This embodiment has the advantage that no solid crystalline material can penetrate into the underlying vaporiser chamber.

The other end of the line is provided with a valve, which can be operated via a magnet located outside the housing. There is now no need to make through-bores in the housing for operation of the valve, so that the gastightness of the housing is ensured in this case also.

According to a second embodiment, the heat accumulator is located in a separate gastight housing which is connected via a vapour line to the top of the container. The form in which the housing is pipe-shaped and has, on the inside, a concentric tube which opens into the exterior, an annular space also being present between the tubes to receive the crystalline material and, finally, the outer tube being provided on the outside and the inner tube being provided on the inside with heat exchangers, has the advantage that an appreciable heat exchange capacity is obtained.

According to a third design variant, the heat accumulator is connected via a second vapour line to a separate condenser, which separate condenser is connected by means of a liquid line to the holder or the reservoir. The vapour escaping from the heat accumulator during charging of the system is transferred via the second vapour line to the condenser, where it condenses. The liquid is fed from the condenser to the vaporiser. In order to be able to alternately charge and discharge the system, each vapour line is connected by its own valve to the heat accumulator. When charging the system the valve in the vapour line for the condenser is open and that for the vaporiser is closed, and vice versa when discharging the system.

If each valve is a spring-loaded valve, the direction of the spring loading of which being counter to the vapour flow direction, the opening and closing of the valves can be controlled entirely automatically as a function of the pressures generated in the system.

In a fourth embodiment there are two heat accumulators which are connected in parallel to two vapour lines, one of which is connected to the condenser and the other to the vaporiser. If, with this arrangement, the heat exchangers interacting with the heat accumulators can be operated coupled together, so that alternately one heat accumulator is cooled and the other is heated, a continuous operation of the vaporiser can be obtained. In this case this installation can provide continuous cooling.

If the energy system is used at low temperature, the use of, for example, ammonia as heat-transporting substance is to be preferred. The manufacture of the vessel and of the accumulator can then take place in the same way, except that the water of crystallisation is completely removed from the sodium sulphide during drying, if necessary at a temperature above 100°C, so that no further removable water of crystallisation is present. The system is then filled with a sufficient amount of ammonia. Because higher pressures can arise when ammonia is used, it may be necessary to reinforce the construction of the system, for example by fitting reinforcing ribs around the cylinder.

Lower temperatures can also be achieved by adding a substance which lowers the freezing point, such as sodium chloride, to the vaporising liquid in the vaporiser/condenser.

The heat accumulator according to the invention can be used for diverse applications. A heat accumulator containing water as heat-transporting substance can be used for the temporary storage of waste heat or of heat obtained in another way and having a temperature of, for example, 60-140°C. This heat is fed to the solids container, by which means the heat accumulator is charged. The system can then be discharged again, heat being recovered at the same or a lower or higher temperature level. This temperature level depends in particular on the temperature at which the vaporiser section is maintained.

By cooling the solids container during discharging, for example to 20°C, cooling can be achieved at the vaporiser side at a level below the ambient temperature, for example at 0-4°C or lower. With a system of this type, the temperature at the vaporiser side can be controlled by controlling the temperature (or rather the degree of cooling) at the solids side as a function of the temperature at the vaporiser side.

The invention will now be illustrated in more detail with reference to the appended drawings.

Fig. 1 shows one embodiment of an energy system provided with a heat accumulator according to the invention.

Fig. 2 shows a second embodiment.

Fig. 3 shows a third embodiment.

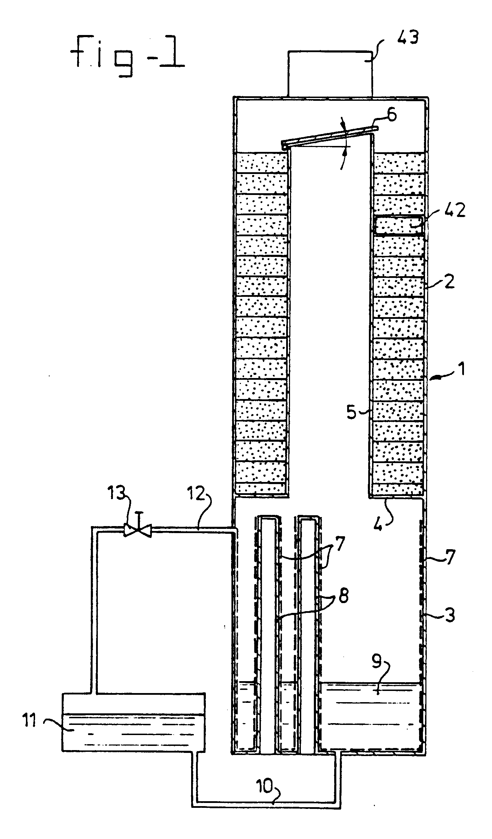

The energy system shown in Fig. 1 has a pipe-shaped housing 1, containing a container 2 for crystalline material (heat accumulator) and a vaporiser/condenser installation containing a holder 3. Container 2 and installation 3 are separated from one another by a partition 4. The section above the partition 4 is the solids section (the "hot" side) of the energy system (the heat accumulator) and the section below the partition 4 is the vaporiser/condenser section (the "cold" side) of the energy system. An interruption of a material having a relatively poor thermal conductivity can be fitted in the tube between the hot and the cold side, so that heat transfer from the hot section to the cold section is restricted.

In container 2 there is a surface-enlarging and heat-conducting structure in the form of a rectangular winding 42 of metal wire which is fitted in the form of a spiral.

A line 5 is connected to the partition 4. Via valve 6, the line 5 offers a connection between container 2 and holder 3. Both container 2 and holder 3 are provided with known heat exchangers (not shown).

Holder 3 is provided on the inside with a capillary structure in the form of a gauze 7, fitted on the inner wall of holder 3. Holder 3 can also be provided with support elements 8, which are also covered with gauze 7. The gauze 7 extends above and below the liquid level 9. The holder can, for example, have a diameter of 150 mm and a height of 500 mm.

Holder 3 is connected via line 10 to a reservoir 11, in which liquid can also be present. By means of this reservoir 11, the fluctuations in the height of the liquid level 9 can be kept under control when using the system. This signifies that a significant portion of the gauze can always be kept above the water level, which is advantageous if the vaporisation and condensation are to proceed smoothly. In order to restrict the fluctuations in height even in the case of a relatively large amount of liquid, the cross-section of the reservoir parallel to the horizontal is chosen to be as large as possible. The reservoir can, for example, be constructed as a horizontal copper tube having a diameter of 100 mm and a length of 400 mm.

By means of line 12 with valve 13, the tops of holder 3 and reservoir 11 can be connected to one another. In the charged state of the system, the reservoir can contain a large proportion of the sorbate, for example 20 to 80%.

Valve 6 can be operated by means of a magnet 14, which is located outside the housing 1. Thus, the gas- tightness of the housing 1 can be maintained. Valve 6 can optionally be positioned at an angle, in order to promote the opening by means of the magnet.

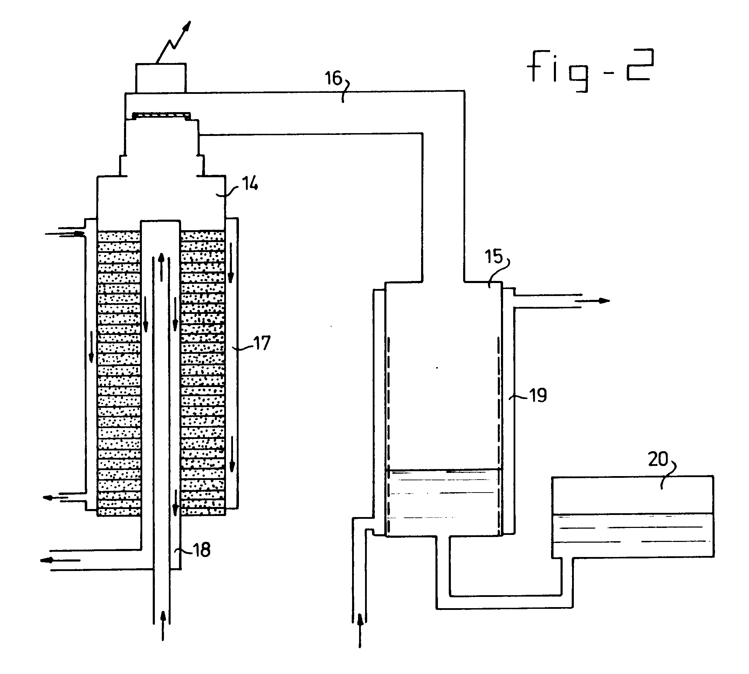

In the alternative embodiment shown in Fig. 2 the container 14 of the heat accumulator and the holder 15 of the vaporiser/condenser installation are placed alongside one another and connected by a line 16. It is true that this design is less compact, but it does have the advantage that a more intense heat exchange can be obtained with the heat accumulator. This is achieved in that a heat exchanger 17 and 18 respectively can be fitted both on the outside and on the inside of the container 14. The holder 15 is also provided with a heat exchanger 19, while it is also connected to the reservoir 20 already described.

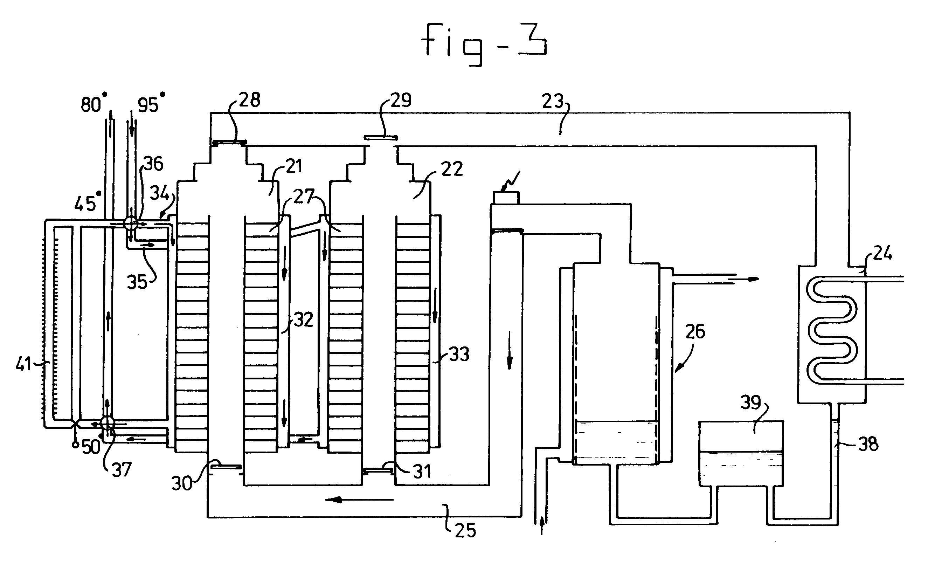

The third embodiment shown in Fig. 3 shows an energy system in which two heat accumulators according to the invention, 21 and 22, are used. The heat accumulators 21 and 22 are connected in parallel. Via vapour line 23 they are both connected to a condenser installation 24. Via a vapour line 25 they are connected to a vaporiser/condenser installation 26. Each heat accumulator is provided with a crystalline material 27, while the lines 23, 25 are connected by means of spring-loaded valves 28, 29 and 30, 31 respectively to the space in which the crystalline material 27 is present.

The heat accumulators 21, 22 are both provided with heat exchangers 32, 33 having a pipe system 34 and 35 respectively. The two pipe systems 34, 35 can be connected to one another by means of four-way valves 36, 37.

In the situation shown in Fig. 3, the heat accumulator 22 is heated, that is to say it is charged, while the heat accumulator 21 is cooled, that is to say the latter is discharged. The heat liberated during cooling of heat accumulator 21 is released by a heat exchanger 41. The vapour liberated during charging of heat accumulator 22 leads to an increase in pressure in the space in which the crystalline material is present, as a result of which valve 31 is pressed closed and valve 29 is pressed open. The vapour then flows through the vapour line 23 to condenser 24, where it condenses. The condensate 38 then flows to the reservoir 39, which, in turn, is again connected to the vaporiser/condenser installation 26. The liquid is vaporised again in this installation and the vapour is fed via line 25 to the heat accumulator 21. As a result of vaporisation in the vaporiser/condenser installation 26 it is ensured that a specific pressure always prevails in line 25. In combination with the vacuum generated in heat accumulator 21 as a consequence of the discharging thereof, the vapour being absorbed in the crystalline material and a reduction in pressure occurring in the space in which said material is present, valve 30 is pressed open. By this means fresh vapour can always enter into the heat accumulator 21. This continues unt the heat accumulator 21 has been discharged.

The heat accumulator 21 is more or less discharged at approximately the same time as the heat accumulator 22 is charged. This signifies that no further vapour can be absorbed in the crystalline material in the heat accumulator 21, so that the pressure in this space becomes equal to that in line 25. The spring valve 30 then closes and the spring valve 28 opens as a result of the increased pressure in the space in the heat accumulator 21 and the relatively low pressure in the vapour line 23 as a consequence of the condensation in condenser 24. During this operation the four-way valves 36, 37 are switched over, so that heat accumulator 22 is now cooled and the heat accumulator 21 is heated. During this entire process alternate heating and cooling of the heat accumulators thus occurs, while a continuous flow of vapour through the lines 23, 25 takes place. Furthermore, condensation takes place continuously in the condenser 24, while vaporisation occurs continuously in the vaporiser/condenser installation 26. Heat accumulator 22 is heated with a liquid to a temperature of 95°C from an external source.

### EXAMPLE I

A copper tube having a diameter of 89 mm, a wall thickness of 2 mm and a length of 500 mm is provided with a wire which is wound in the form of a spiral, has a thickness of 1 mm and is soldered at one side of the rectangular loop to the tube. The height of the loop is 30 mm and per cm² 8 loops are distributed as well as possible over the surface. This system is then pushed into a copper tube having a diameter of 154 mm, which outer tube has a wall thickness of 2 mm and a length of 600 mm. The tops of the loops are then soldered firmly to the outer tube. The bottom of the double tube is provided with a disc 4 (see Fig. 1), so that the container is closed at the bottom while the inner tube remains open. A valve 6, which can be operated by an electromagnet 14, is fitted on the top of the inner tube.

Openings are now made axially between the hairs by pushing a rod having a diameter of 10 mm between the two tubes; the distance between the holes is 20 mm. Casting cores of HDPE having a diameter of 10 mm and a length of 600 mm are now fitted in the openings thus obtained. Na₂S.9H₂O at a temperature of about 80°C is then siphoned into the heat exchanger under vacuum. The outer cylinder is cooled with water so that the salt crystallises out around the wires. During this operation, first crystalline Na₂S.5H₂O and then crystalline Na₂S.9H₂O are formed. The casting cores are then removed and the residual liquid is discharged.

The accumulator thus obtained is connected to a vacuum system with a condenser which is cooled to 10°C. The accumulator is now heated to about 35°C, as a result of which the salt is dehydrated to Na₂S.5H₂O. The water collected in the condenser is discharged.

The system is now ready for storing heat. This is effected by supplying heat at a temperature of at least 70°C (if the condenser is kept at 10°C) to the salt side. Charging, that is to say dehydration, takes about 1-3 hours, depending on the temperature maintained. 1kWh of heat can be stored per kg of Na₂S.

During discharging, that is to say the rehydrating of the salt, 1kWh of heat is liberated at the accumulator (the salt side), while approximately 0.7 kWh of heat is removed at the vaporiser side, per kg of Na₂S. The discharge time is highly dependent on the temperatures of the vaporiser and the salt side and can vary between 0.5 and more than 10 hours.

### EXAMPLE II

The method of Example I is repeated, except that casting cores of HDPE are not used and the fluid sodium sulphide is siphoned directly into the heat accumulator under vacuum. The salt is crystallised out around the wires by cooling the heat exchanger, while the longitudinal grooves remain free. After some time the residual fluid salt is siphoned out of the accumulator.

### EXAMPLE III

A heat accumulator as in Fig. 2 is produced in accordance with the method of Example II. For this purpose the inner tube is now also closed at the top. The valve is positioned on top of the outer tube, so that the tube which provides the connection to the vaporiser/ condenser is now connected at the top to the accumulator. The space in the inner tube is now used as a second contact surface with the heat transfer medium.

## Claims

1. Heat accumulator for the storage and/or release of heat, consisting of a vessel (2,14) having a wall which is at least partially heat-conducting, with surface-enlarging, heat-conducting projections (42) at the inner wall of the vessel, which vessel contains a crystalline material which exothermally absorbs and endothermally desorbs a heat-transporting substance, characterised in that the crystalline material comprises sodium sulphide which adheres to the inner wall and remains adhering during use and has essentially the same structure in a state in which more heat-transporting substance is absorbed and in a state in which less heat-transporting substance is absorbed.

2. Heat accumulator according to Claim 1, characterised in that the vessel comprises two mainly vertically positioned, concentric tubes (2) and (5), the bottom of the space between the two tubes being shut off (4) and the crystalline material being present in the space between the two tubes.

3. Heat accumulator according to Claim 2, characterised in that the the inner tube is provided with a valve (6) which can be operated via a magnet (43) located outside the vessel, the inner tube (5) serving to supply and remove the heat-transporting substance.

4. Heat accumulator according to Claim 2, characterised in that the inner tube (5) is provided on the inside with a heat exchanger (18).

5. Heat accumulator according to one of Claims 1-4, characterised in that the vessel is provided on the outside with a heat exchanger (17).

6. Method for the production of a heat accumulator consisting of a closeable vessel having a wall which is at least partially heat-conducting, and containing a crystalline material which exothermally absorbs and endothermally desorbs a heat-transporting substance, the method comprises the following steps : providing the inner wall of the closeable vessel with surface-enlarging, heat-conducting projections, applying sodium sulphide in a molten and/or highly hydrated state to the inner wall, and subsequently crystallizing the molten and/or hydrated sodium sulphide by subjecting it to cooling and/or evaporation so that the sodium sulphide adheres to the wall and remains adhering thereto during use.

7. Method according to Claim 6, characterised in that a filler body is kept in the vessel during the application of the crystalline material.

8. Method according to Claim 6 or 7, characterised in that during the application of the crystalline material the procedure is carried out with the exclusion of oxygen.

9. Energy system, comprising a heat accumulator (2,14) containing a heat-transporting substance which can be either in the liquid phase or in the vapour phase, and a vaporiser and condenser (3,15), connected via a closeable vapour line (5,16) to the heat accumulator (2,14), for the vaporisation or condensation of the heat-transporting substance, characterised in that the system comprises a heat accumulator according to one of Claims 1-5.

10. Energy system according to Claim 9, in which the heat accumulator and the vaporiser/condenser have a common gastight housing (1), the lower section of which is the vaporiser/condenser (3) and the upper section of which is the heat accumulator (2).

11. Energy system according to Claim 10, in which the heat accumulator (2) and the vaporiser/condenser (3) are connected to one another via a connecting piece (4) of thermally insulating material.

12. Energy system according to Claim 9, in which the vaporiser (26) and the condenser (24) are separate and are each connected via a closeable vapour line (25,23) to the heat accumulator and are mutually connected via a liquid line (38).

13. Energy system according to Claim 12, in which the heat accumulator having closeable vapour lines is designed as a double system (21,22) for continuous use.

14. Energy system according to one of Claims 9-13, in which the heat-transporting substance is water.

15. Energy system according to one of Claims 9-13, in which the heat-transporting substance is ammonia.

## Patentansprüche

1. Wärmespeicher zum Speichern und/oder Freigeben von Wärme, bestehend aus einem Behälter (2,4), der eine Wand aufweist, die zumindest teilweise wärmeleitend ist, mit die Oberfläche vergrößernden, wärmeleitenden Vorsprüngen (42) an der Innenwand des Behälters, der ein kristallines Material enthält, welches exotherm eine Wärmetransportsubstanz absorbiert und endotherm diese desorbiert, dadurch gekennzeichnet, daß das kristalline Material Natriumsulfid umfaßt, welches an der Innenwand anhaftet und an dieser im Gebrauch anhaftend bleibt und im wesentlichen den selben Aufbau in einem Zustand, in welchem mehr Wärmetransportsubstanz absorbiert wird, und in einem Zustand aufweist, in welchem weniger Wärmetransportsubstanz absorbiert wird.

2. Wärmespeicher nach Anspruch 1, dadurch gekennzeichnet, daß der Behälter (2) im wesentlichen vertikal angeordnete, konzentrische Rohre (2) und (5) aufweist, wobei der Boden des Raumes zwischen den beiden Rohren abgeschlossen ist (4), und das kristalline Material in dem Raum zwischen den zwei Rohren vorhanden ist.

3. Wärmespeicher nach Anspruch 2, dadurch gekennzeichnet, das das innere Rohr mit einem Ventil (6) versehen ist, welches durch einen außerhalb des Behälters angeordneten Magneten (43) betätigt werden kann, wobei das innere Rohr (5) dazu dient, die Wärmetransportsubstanz zuzuführen und zu entfernen.

4. Wärmespeicher nach Anspruch 2, dadurch gekennzeichnet, daß das innere Rohr (5) an der Innenseite mit einem Wärmetauscher (18) versehen ist.

5. Wärmespeicher nach einem der Ansprüche 1 bis 4, dadurch gekennzeichnet, daß der Behälter an der Außenseite mit einem Wärmetauscher (17) versehen ist.

6. Verfahren zur Herstellung eines Wärmespeichers, der aus einem abschließbaren Behälter besteht, der mit einer zumindest teilweise wärmeleitenden Wand versehen ist, und ein kristallines Material enthält, welches exotherm eine Wärmetransportsubstanz absorbiert und diese endotherm desorbiert, wobei das Verfahren folgende Schritte aufweist: Vorsehen von die Oberfläche vergrößernden, wärmeleitenden Vorsprüngen an der Innenwand des abschließbaren Behälters, Aufbringen von Natriumsulfid in geschmolzenem und/oder hochhydratisiertem Zustand auf die Innenwand, und nachfolgendes Kristallisieren des geschmolzenen und/oder hydratisierten Natriumsulfids, indem dieses einer Abkühlung und/oder Verdampfung ausgesetzt wird, so daß das Natriumsulfid an der Wand anhaftet und an dieser im Gebrauch anhaftend bleibt.

7. Verfahren nach Anspruch 6, dadurch gekennzeichnet, daß ein Füllkörper in dem Behälter während des Anbringens des kristallinen Materials vorhanden ist.

8. Verfahren nach Anspruch 6 oder 7, dadurch gekennzeichnet, daß während des Aufbringens des kristallinen Materials der Vorgang unter Ausschluß von Sauerstoff durchgeführt wird.

9. Energiesystem mit einem Wärmespeicher (2,14), der eine Wärmetransportsubstanz enthält, die entweder in flüssiger Phase oder in der Dampfphase vorliegen kann, sowie einen Verdampfer und Kondensator (3,15), der über eine abschließbare Dampfleitung (5,16) an den Wärmespeicher (2,14) angeschlossen ist, für die Verdampfung oder Kondensation der Wärmetransportsubstanz, dadurch gekennzeichnet, daß das System einen Wärmespeicher gemäß einem der Patentansprüche 1 bis 5 aufweist.

10. Energiesystem nach Anspruch 9, bei welchem der Wärmespeicher und der Verdampfer/Kondensator ein gemeinsames, gasdichtes Gehäuse (1) aufweisen, dessen unterer Abschnitt den Verdampfer/Kondensator (3) bildet, und dessen oberer Abschnitt den Wärmespeicher (2) bildet.

11. Energiesystem nach Anspruch 10, bei welchem der Wärmespeicher (2) und der Verdampfer/Kondensator (3) miteinander über ein Verbindungsstück (4) aus wärmeisolieren dem Material verbunden sind.

12. Energiesystem nach Anspruch 9, bei welchem der Verdampfer (26) und der Kondensator (24) getrennt sind, und über eine schließbare Dampfleitung (25, 23) mit dem Wärmespeicher und miteinander über eine Flüssigkeitsleitung (38) verbunden sind.

13. Energiesystem nach Anspruch 12, bei welchem der mit schließbaren Dampfleitungen versehene Wärmespeicher als Doppelsystem (21, 22) für durchgehenden Gebrauch ausgelegt ist.

14. Energiesystem nach einem der Ansprüche 9 bis 13, bei welchem die Wärmetransportsubstanz Wasser ist

15. Energiesystem nach einem der Ansprüche 9 bis 13, bei welchem die Wärmetransportsubstanz Ammoniak ist.

## Revendications

1. Accumulateur de chaleur pour le stockage et/ou la libération de chaleur, consistant en une cuve (2,14) ayant une paroi qui est au moins partiellement conductrice de chaleur, avec des saillies d'agrandissement conductrices de chaleur (42) dans la paroi intérieure de la cuve, laquelle cuve contient un matériau cristallin qui absorbe de façon exothermique et libère de façon endothermique une substance transporteuse de chaleur, caractérisé en ce que le matériau cristallin comprend du sulfure de sodium qui adhère à la paroi intérieure et reste adhésif pendant l'utilisation et a essentiellement la même structure dans un état dans lequel plus de substance transporteuse de chaleur est absorbée et dans un état dans lequel moins de substance transporteuse de chaleur est absorbée.

2. Accumulateur de chaleur selon la revendication 1 caractérisé en ce que la cuve comprend deux tubes concentriques positionnés principalement verticalement (2) et (5), le fond de l'espace entre les deux tubes étant sectionné (4) et le matériau cristallin étant présent dans l'espace entre les deux tubes.

3. Accumulateur de chaleur selon la revendication 2 caractérisé en ce que le tube interne est muni d'un robinet (6) qui peut être actionné par l'intermédiaire d'un aimant (43) situé à l'extérieur de la cuve, le tube intérieur (5) servant à fournir et retirer la substance transporteuse de chaleur.

4. Accumulateur de chaleur selon la revendication 2 caractérisé en ce que le tube interne (5) est muni à l'intérieur d'un échangeur de chaleur (18).

5. Accumulateur de chaleur selon l'une quelconque des revendications 1 à 4 caractérisé en ce que la cuve est munie à l'extérieur d'un échangeur de chaleur (17).

6. Méthode de production d'un accumulateur de chaleur consistant en une cuve hermétique ayant une paroi qui est au moins partiellement conductrice de chaleur, et contenant un matériau cristallin qui absorbe de manière exothermique et libère de manière endothermique une substance transporteuse de chaleur, la méthode comprenant les étapes suivantes: munir la paroi intérieure de la cuve hermétique avec des saillies d'agrandissement conductrices de chaleur, appliquer du sulfure de sodium dans un état fondu et/ou extrêmement hydraté sur la paroi intérieure, et postérieurement cristalliser le sulfure de sodium fondu et/ou extrêmement hydraté en le soumettant à refroidissement et/ou évaporation, afin que le sulfure de sodium adhère à la paroi et y reste adhésif durant l'utilisation.

7. Méthode selon la revendication 6 caractérisée en ce que un corps de remplissage est gardé dans la cuve pendant l'application du matériau cristallin.

8. Méthode selon la revendication 6 ou 7 caractérisée en ce que pendant l'application du matériau cristallin la procédure est exécutée à l'abri de l'oxygène.

9. Système d'énergie comprenant un accumulateur de chaleur (2, 14) contenant une substance transporteuse de chaleur qui peut être soit en phase liquide soit en phase vapeur, et un évaporateur et un condenseur (3, 15), connectés par l'intermédiaire d'une ligne de vapeur pouvant être barrée (5, 16) à l'accumulateur de chaleur (2, 14) pour la vaporisation ou condensation de la substance transporteuse de chaleur, caractérisé en ce que le système comprend un accumulateur de chaleur selon l'une quelconque des revendications 1 à 5.

10. Système d'énergie selon la revendication 9, dans lequel l'accumulateur de chaleur et l'évaporateur/condenseur ont un carter commun étanche au gaz (1), dont la partie basse est l'évaporateur/condenseur (3) et la partie haute l'accumulateur de chaleur(2).

11. Système d'énergie selon la revendication 10, dans lequel l'accumulateur de chaleur (2) et l'évaporateur/condenseur (3) sont reliés l'un à l'autre par l'intermédiaire d'une pièce de raccordement (4) en matière thermiquement isolante.

12. Système d'énergie selon la revendication 9, dans lequel l'évaporateur (26) et le condenseur (24) sont séparés et sont chacun reliés par l'intermédiaire d'une ligne de vapeur pouvant être barrée (25, 23) à l'accumulateur de chaleur et sont mutuellement reliés par l'intermédiaire d'une ligne liquide (38).

13. Système d'énergie selon la revendication 12, dans lequel l'accumulateur de chaleur ayant des lignes de vapeur pouvant être barrées est conçu comme un système double (21, 22) pour usage continu.

14. Système d'énergie selon l'une quelconque des revendications 9 à 13, dans lequel la substance transporteuse de chaleur est de l'eau.

15. Système d'énergie selon l'une quelconque des revendications 9 à 13, dans lequel la substance transporteuse de chaleur est de l'ammoniaque.
